# EUROPEAN PATENT SPECIFICATION

(11) **EP 1 366 974 B1**
(45) Date of publication and mention of the grant of the patent: **03.09.2008**
(21) Application number: 03007144.3
(22) Date of filing: 28.03.2003
(51) Int. Cl.: B62M 11/06

(54) **Power unit for small-size vehicles**
Antriebseinheit für ein Kleinfahrzeug
Unité de commande de puissance pour petit véhicule

(30) Priority: 31.05.2002 JP 2002159455
(43) Date of publication of application: 03.12.2003
(73) Proprietor: HONDA GIKEN KOGYO KABUSHIKI KAISHA, Minato-ku, Tokyo (JP)
(72) Inventor: Hirayama, Shuuji, 4-1, Chuo 1-chome, Wako-shi, Saitama (JP); Yahagi, Kunio, 4-1, Chuo 1-chome, Wako-shi, Saitama (JP)
(74) Representative: Liska, Horst

(56) References cited:
- FR-A1- 2 776 578
- JP-A- 58 152 625
- JP-U- 63 036 632
- US-A1- 5 065 644
- US-A1- 5 690 084
- US-A1- 2002 043 237

## Description

The present invention relates to a power unit for a small-size vehicle such as a motorcycle or the like, and more particularly to an improvement in a power unit for a small-size vehicle having a crankcase accommodating a crankshaft supported therein, a transmission input shaft coupled to the crankshaft by a clutch, a transmission output shaft accommodated and supported in the crankcase, a plurality of transmission gear trains disposed between the transmission input shaft and the transmission output shaft, and a change mechanism for selectively operating either one of the transmission gear trains, said change mechanism having at least a portion disposed on one side of the crankcase.

There is known a power unit for small-size vehicles as disclosed in Japanese laid-open utility model publication No. 60-31536, for example.

If many parts of the change mechanism of a power unit for small-size vehicles are located outside of the crankcase, then the power unit has its appearance impaired by those parts.

In such a power unit for small-size vehicles, if a kick spindle for cranking the crankshaft to start the engine is mounted on the crankcase, then the kick arm fixed to an outer end of the kick spindle should preferably be positioned laterally as outwardly of the vehicle as possible for smooth operation. However, if the outer end of the kick arm supported on the crankcase is simply extended laterally outwardly with the kick arm mounted thereon, then the kick spindle overhangs a large distance from the crankcase, and has its supporting rigidity lowered. If the kick spindle is to be firmly supported on the crankcase, then the crankcase has to have an increased transverse width and results in an increased size thereof.

US 5,065,644 A1shows a power unit in accordance with the preamble of claim 1.

The present invention has been made in view of the above drawback. It is an object of the present invention to provide a power unit for small-size vehicles which covers many parts of a change mechanism, provides increased supporting rigidity for a kick spindle, and is compact and has a neat appearance.

To achieve the above object, there is provided in accordance with the present invention a power unit for a small-size vehicle having a crankcase accommodating a crankshaft supported therein, a transmission input shaft accommodated and supported in said crankcase and coupled to the crankshaft by a clutch, a transmission output shaft accommodated and supported in said crankcase, a plurality of transmission gear trains disposed between the transmission input shaft and the transmission output shaft, and a change mechanism for selectively operating either one of said transmission gear trains, said change mechanism having at least a portion disposed on one side of the crankcase, wherein a side cover accommodates a portion of the change mechanism which is exposed out of the crankcase and is detachably joined to a side wall of the crankcase, said side cover supports a kick spindle for cranking the crankshaft in cooperation with the crankcase, and a kick arm is fixed to an outer end of the kick spindle which projects out of said side cover, characterized in that said change mechanism comprises a shift shaft slidably fitted with the center of at least one of the transmission input shaft and the transmission output shaft from the side cover, selectively operating either one of the transmission gear trains corresponding to the sliding, a change spindle angularly movably supported on the side cover, a change arm mounted on the change spindle in the side cover for sliding the shift shaft in response to angular movement of the change spindle, and a change control member coupled to the change spindle outside of the side cover, the change arm being disposed between said shift shaft and said kick spindle.

According to the invention, many parts of the change mechanism can be accommodated in the first side cover to make the power unit appear neatly. Since the kick spindle projecting a long distance laterally outwardly of the crankcase is supported by the crankcase and the side cover, the power unit is of a compact structure, and the supporting rigidity of the kick spindle is increased, thus increasing the durability of the kick spindle and its supporting region. The kick arm fixed to the outer end of the kick spindle extending through the side cover is disposed laterally outwardly of the vehicle, and hence can be kicked smoothly. The maintenance of the change mechanism and the kick spindle can be carried out easily by removing the side cover from the crankcase.

As the change arm, which is a relatively large and largely movable component among other components of the change mechanism, is disposed between the kick spindle and the shift shaft, the space in the side cover is effectively utilized to accommodate the change mechanism therein, resulting in a contribution to a compact arrangement of the side cover and hence a compact arrangement of the power unit.

Here, the first and second side covers include a unitary side cover which provides a continuous inner surface in the first and second side covers.

Since the first and second side covers are of a unitary structure, the number of parts used and the number of assembling steps can be reduced, and the change mechanism and the kick spindle can be positioned closely to each other, thus contributing to a compact arrangement of the power unit.

The change control member corresponds to a change grip in the embodiment of the present invention to be described later on.

Preferably, the side cover comprises a first side cover accommodating the portion of the change mechanism which is exposed out of the crankcase and being detachably joined to the side wall of the crankcase, and a second side cover supporting the kick spindle for cranking the crankshaft in cooperation with the crankcase and being detachably joined to the side wall of the crankcase.

The first side cover and the second side cover correspond respectively to a rear half portion and a front half portion of a right side cover in an embodiment of the present invention to be described later on.

Preferably, the kick spindle is supported by three walls including a side wall of the second side cover and both side walls of the crankcase.

According to this feature, the supporting rigidity of the kick spindle which is relatively long is further increased, further increasing the durability of the kick spindle and its supporting region.

Preferably, a one-way clutch mechanism disposed in the crankcase for transmitting rotational power of the kick spindle to the crankshaft in response to a kick action on the kick arm, and return springs disposed in the second side cover for biasing the kick spindle in a direction to return the kick arm.

According to this feature, the one-way clutch mechanism and the return springs can be assembled well, and can be made resistant to water and dust.

An embodiment of the present invention will be described below with reference to the accompanying drawings.
FIG. 1 is a side elevational view of a motorcycle incorporating a power unit according to the present invention.
FIG. 2 is an enlarged fragmentary side elevational view of the motorcycle shown in FIG. 1.
FIG. 3 is a cross-sectional view taken along line 3 - 3 of FIG. 2.
FIG. 4 is a cross-sectional view taken along line 4 - 4 of FIG. 2.
FIG. 5 is a cross-sectional view taken along line 5 - 5 of FIG. 4.
FIG. 6 is a cross-sectional view taken along line 6 - 6 of FIG. 4.
FIG. 7 is a cross-sectional view taken along line 7 - 7 of FIG. 4.

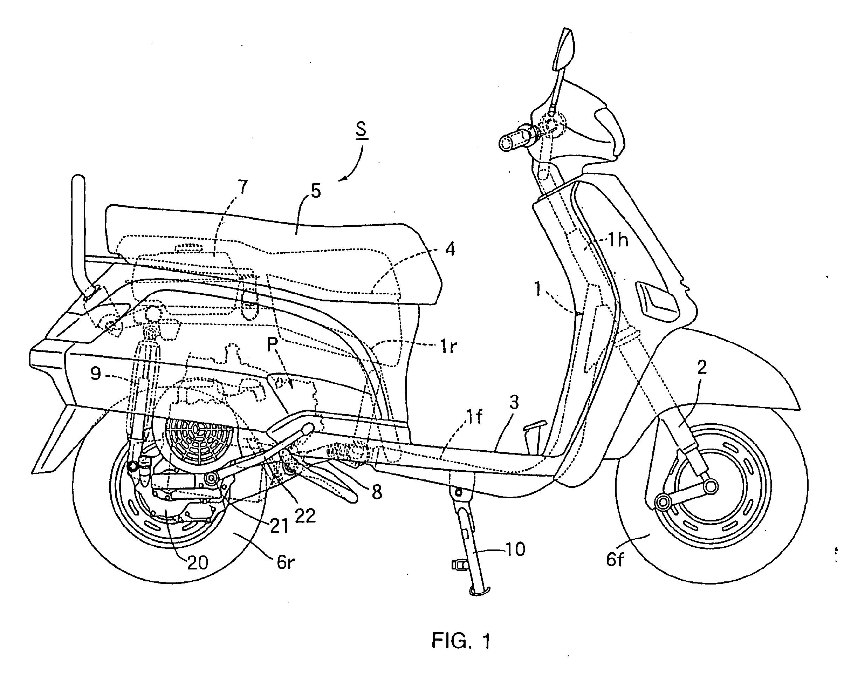

As shown in FIG. 1, a body frame 1 of a motorcycle S as a small-size vehicle comprises a front frame 1f extending downwardly from a head pipe lh on which a front fork 2 is steerably supported and supporting a step floor 3 thereon, and a rear frame 1r extending obliquely upwardly from a rear end of the front frame 1f and supporting thereon a luggage box 4, a rider's seat 5, and a fuel tank 7. A front wheel 6f is supported by a shaft on the lower end of the front fork 2. A suspension link 8 is resiliently supported on the rear frame 1r. A power unit P which supports and drives a rear wheel 6r is vertically swingably supported on the suspension link 8. Between the rear frame 1r and the power unit P, there is attached a rear cushion 9 for damping vertical swinging movements of the power unit P. A stand 10 for holding the motorcycle in an upstanding position is mounted on the front frame 1f. The motorcycle S is thus of a scooter shape.

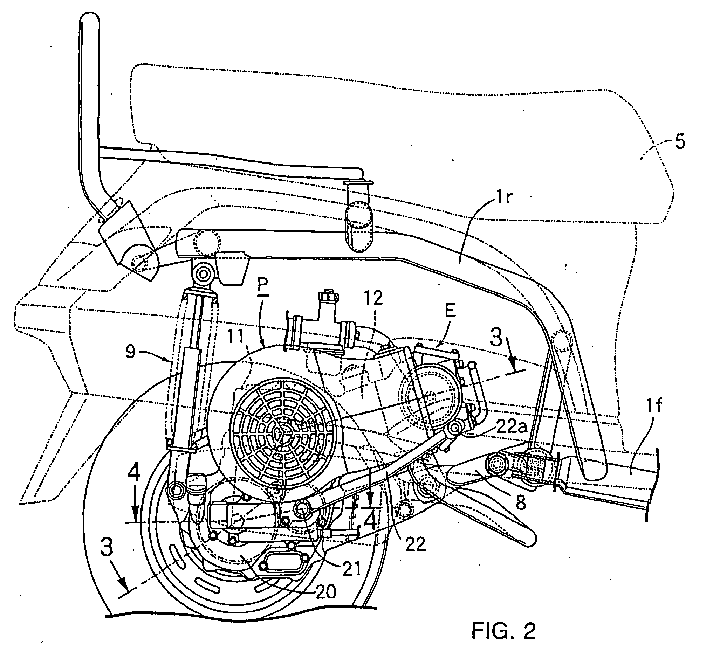

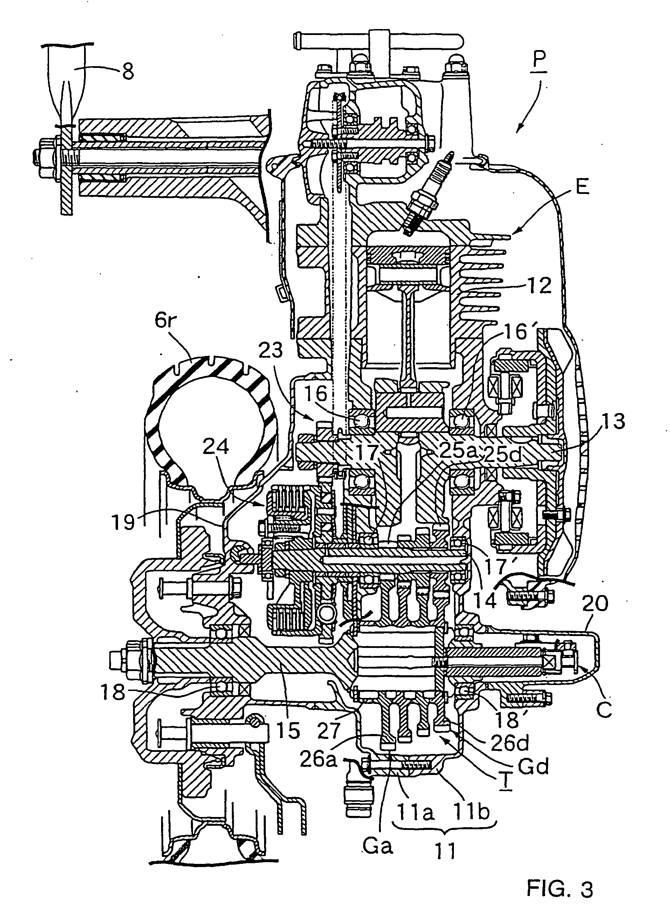

As shown in FIGS. 2 and 3, the power unit P includes an engine E having a crankcase 11 in which a crankshaft 13 and a gear transmission T are accommodated. The crankcase 11 of the engine E is coupled to a forwardly inclined cylinder block 12, and comprises a left case half member 11a and a right case half member 11b which are fastened to each other by bolts across vertical dividing surfaces thereof. The crankshaft 13 and a transmission input shaft 14 which extend parallel to each other are supported on the case half members 11a, 11b by respective pairs of bearings 16, 16' and 17, 17'. A transmission output shaft 15 which extends parallel to the transmission input shaft 14 is supported on the right case half member 11b and a left side cover 19 joined to an outer side surface of the left case half member 11a, by bearings 18, 18'. A right side cover 20 is fastened to an outer side surface of the right case half member 11b by a plurality of bolts 28. A kick spindle 21 extending parallel to the crankshaft 13 is supported by three side walls of the left and right case half members 11a, 11b and a front half member 20a of the right side cover 20.

As shown in FIG. 2, the transmission input shaft 14 is disposed downwardly of the crankshaft 13, and the transmission output shaft 15 is disposed downwardly and rearwardly of the transmission input shaft 14. As shown in FIG. 3, the rear wheel 6r is mounted on a left end portion of the transmission output shaft 15 which projects out of the left case half member 11a. With this arrangement, the forwardly inclined cylinder block 12 can have a sufficient height from the ground, and a sufficient intershaft distance, i.e., a sufficient wheelbase, is maintained between the front wheel 6f and the rear wheel 6r. Referring back to FIG. 2, the kick spindle 21 is disposed slightly downwardly and forwardly of the transmission input shaft 14. A kick arm 22 which supports a pedal 22 facing upwardly on its front end is fixed to a right end of the kick spindle 21 which extends through the front half member 20a of the right side cover 20. The kick arm 22 can be kicked by the right foot of the rider while the rider is sitting on the rider's seat 5.

As shown in FIG. 3, a primary speed reducer 23 is disposed between left end portions of the crankshaft 13 and the transmission input shaft 14 which project out of the left case half member 11a. A multiplate clutch 24 is mounted on the left end portion of the transmission input shaft 14. The rotation of the crankshaft 13 is reduced in speed by the primary speed reducer 23, and then transmitted by the clutch 24 to the transmission input shaft 14. The primary speed reducer 23 and the clutch 24 are covered with the left side cover 19.

Between the transmission input and output shafts 14, 15, there are disposed a plurality of (four in the illustrated embodiment) transmission gear trains Ga through Gd in the crankcase 11. The transmission gear trains Ga through Gd have respective drive gears 25a through 25d integral with or splined to the transmission input shaft 14, and respective driven gears 26a through 26d rotatably supported on the transmission output shaft 15. A neutral ring 27 is rotatably supported on the transmission output shaft 15 adjacent to one side of the driven gears 26a through 26d.

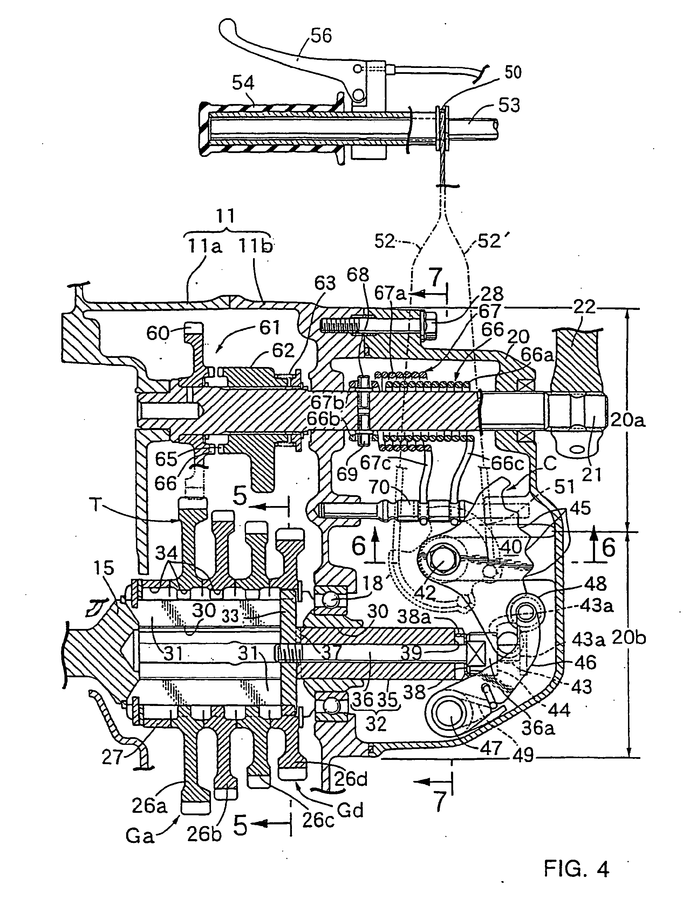

The transmission input and output shafts 14, 15 and the transmission gear trains Ga through Gd jointly make up the transmission T. A change mechanism C for selectively connecting the driven gears 26a through 26d of the transmission gear trains Ga through Gd to the transmission output shaft 15 is constructed as follows (see FIGS. 4 through 7).

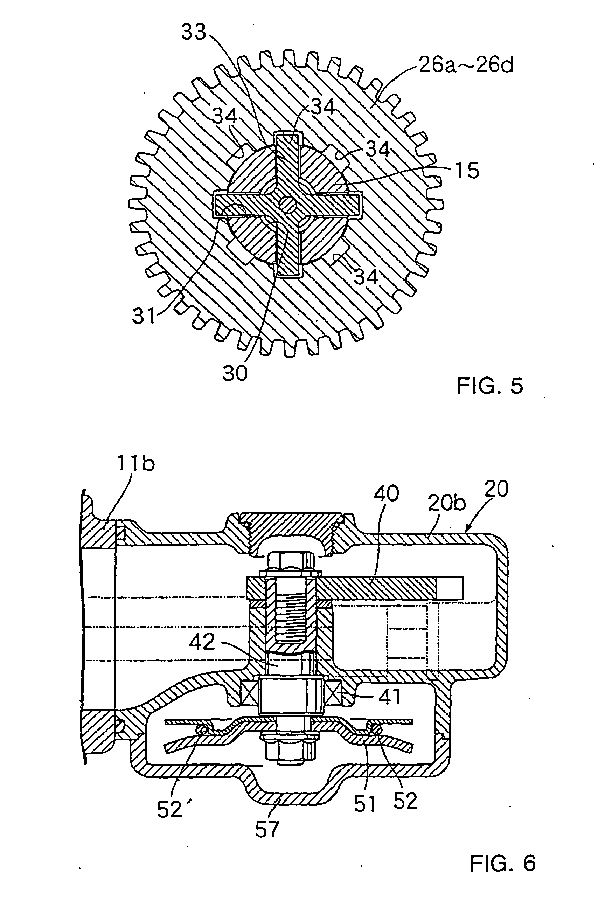

As shown in FIG. 4, the transmission output shaft 15 has a guide hole 30 defined centrally therein and opening toward the right side cover 20 and four guide grooves 31 extending from the guide hole 30 toward the driven gears 26a through 26d. A shift shaft 32 extending from the right side cover 20 is slidably fitted in the guide hole 30. A crisscross engaging pole 33 (see FIG. 5) fixed to an inner end of the shift shaft 32 is slidably disposed in and across the guide grooves 31. The engaging pole 33 is selectively engageable in four or more axial engaging grooves 34 that are defined at circumferentially equal intervals in inner circumferential surfaces of the driven gears 26a through 26d and the neutral ring 27.

The shift shaft 32 comprises a cylindrical outer shaft 35 slidably fitted directly in the guide hole 30 and an inner shaft 36 fitted in a central hole in the outer shaft 35. The engaging pole 33 is threaded over an inner end of the inner shaft 36. An enlarged head 36a formed on an outer end of the inner shaft 36 has an outer circumferential surface beveled for engagement with a tool that is used to thread the engaging pole 33 over the inner shaft 36.

To prevent the inner shaft 36 and the engaging pole 33 from being loosened relatively to each other, a locking irregular-surface engaging member 37 is held against abutting end faces of the engaging pole 33 and the outer shaft 35, and a locking washer 38 is interposed between the head 36a of the inner shaft 36 and the outer shaft 35. The locking washer 38 has a locking tooth 38a which is bent over and engages in a locking slot 39 defined in the outer shaft 35 after the engaging pole 33 has been threaded over the inner shaft 36.

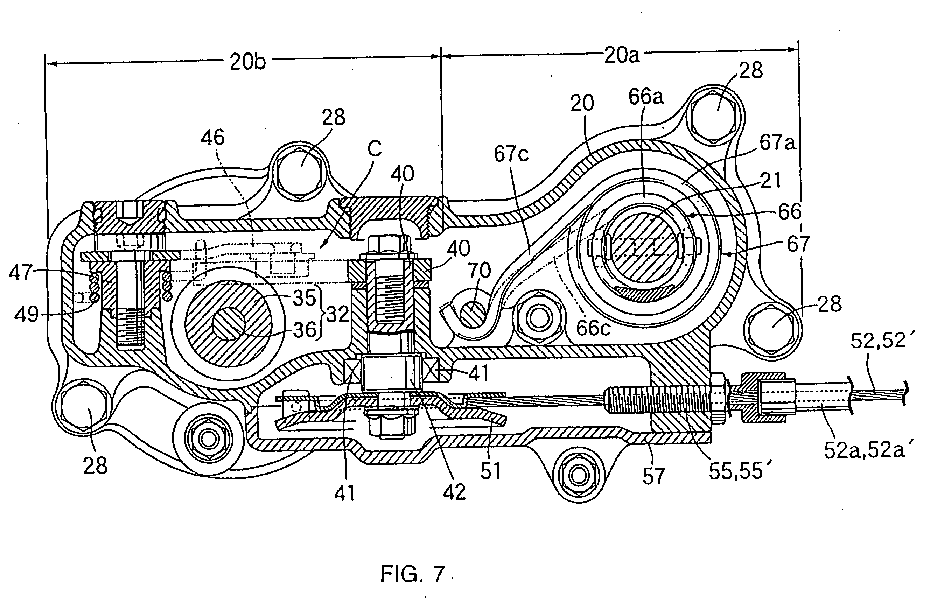

A change arm 40 coupled to the head 36a of the inner shaft 36 for operating the shift shaft 32 is disposed in the right side cover 20 between the kick spindle 21 and the shift shaft 32. The change arm 40 is fixedly mounted on an inner end of a change spindle 42 (see FIGS. 6 and 7) which extends through and is rotatably supported on a bottom wall of the rear half portion 20b of the right side cover 20 with a seal member 41 interposed therebetween. The change arm 40 is sector-shaped about the change spindle 42 and supports a block 43 angularly movably on an end of its outer peripheral side. The block 43 engages in an annular groove 44 defined in the outer circumference of the head 36a of the inner shaft 36 and has a pair of opposite flat surfaces 43a that are held in slidable contact with opposite inner side walls of the annular groove 44. When the change arm 40 is turned, the block 43 axially shifts the inner shaft 36 and hence the shift shaft 32. At this time, since the opposite inner side walls of the annular groove 44 and the opposite flat surfaces 43a of the block 43 slide against each other, the shift shaft 32 is allowed to rotate about its own axis.

The change arm 40 has a plurality of detent notches 45 defined in an outer peripheral edge thereof which are selectively engaged by a detent roller 48 mounted on the tip end of a detent arm 46 which is angularly movably supported on a pivot shaft 47 mounted on an inner wall of the rear half portion 20b of the right side cover 20. The detent arm 46 is normally urged by a detent spring 49 connected thereto to turn in a direction to bring the detent roller 48 into engagement with the detent notches 45. When the change arm 40 axially shifts the shift shaft 32 and the engaging pole 33 engages in one of the engaging grooves 34 in the neutral ring 27 and the driven gears 26a through 26d, the detent roller 48 engages in a corresponding one of the detent notches 45 under the bias of the detent spring 49 to keep the engaging pole 33 engaging in the engaging groove 34.

A driven pulley 51 is fixed to an outer end of the change spindle 42 which projects out of the rear half portion 20b of the right side cover 20. The driven pulley 51 is operatively coupled to a drive pulley 50 connected to a change grip 54 on a steering handle 53 of the motorcycle S, by a speed-increasing cable 52 and a speed-reducing cable 52'. When the change grip 54 is turned to pull the cable 52 or 52', the change spindle 42 is turned in a speed-increasing direction or a speed-reducing direction. `

The cables 52, 52' extend through respective hollow adjustment bolts 55, 55' threaded in an outer side wall of the right side cover 20. The adjustment bolts 55, 55' have respective heads supporting respective ends of guide tubes 52a, 52a' of the cables 52, 52'.

A clutch lever 56 for engaging and disengaging the clutch 24 is mounted on the steering handle 53 near the change grip 54.

A kick starter of the engine E will be described below with reference to FIGS. 4 and 7.

In the crankcase 11, a start gear 60 held in mesh with the drive gear 25a of the first transmission gear train Ga is rotatably and axially immovably supported on the kick spindle 21, and a one-way clutch mechanism 61 is disposed between the start gear 60 and the kick spindle 21 for connecting the start gear 60 and the kick spindle 21 to each other when the kick spindle 21 rotates in a normal direction about its own axis. The one-way clutch mechanism 61 comprises a clutch body 62 fitted over the kick spindle 21 through helical splines for movement toward and away from the start gear 60, and a friction spring 63 for applying a frictional resistance to the rotation of the clutch body 62. The start gear 60 and the clutch body 62 have ratchet teeth 64, 65 on respective confronting surfaces thereof. When the ratchet teeth 64, 65 are held in mesh with each other, the rotation of the clutch body 62 only in the normal direction is transmitted to the start gear 60.

In the front half portion 20a of the right side cover 20, a pair of kick return springs 66, 67 is connected to the kick spindle 21 for biasing the kick arm 22 in a returning direction. The kick return springs 66, 67 comprise torsion coil springs, respectively. The kick return springs 66, 67 have respective coils 66a, 67a disposed as inner and outer coils around the kick spindle 21 and having respective ends 66b, 67b engaging respective engaging pins 68, 69 fixed to the outer circumferential surface of the kick spindle 21 and projecting diametrically away from each other. The kick return springs 66, 67 also have respective arms 66c, 67c extending from the other ends of the coils 66a, 67a and engaging a spring engaging rod 70 with a predetermined torsion load imposed on the coils 66a, 67a. The spring engaging rod 70 has opposite ends supported respectively by the front half portion 20a of the right side cover 20 and the right case half member 11b.

Operation of the power unit according to the embodiment of the present invention will be described below.

When the drive pulley 50 is rotated by the change grip 54, the rotation of the drive pulley 50 is transmitted through the speed-increasing cable 52 or the speed-reducing cable 52' which is pulled to the driven pulley 51, from which the rotation is transmitted through the change spindle 42 to the change arm 40 to turn the change arm 40. Depending on the direction in which the change arm 40 is turned, the shift shaft 32 is shifted axially in one direction or the other, bringing the engaging pole 33 into selective engagement with either one of the engaging grooves 34 of the neutral ring 27 and the drive gears 26a through 26d. The transmission T is now in a neutral position or a gear position corresponding to the selected one of the neutral ring 27 and the transmission gear trains Ga through Gd.

For starting the engine E, the transmission T is brought into the neutral position, and the kick pedal 22a kicked downwardly by the rider's foot against the resiliency of the return springs 66, 67. The kick spindle 21 is rotated in the normal direction to move the clutch body 62 toward the start gear 60, bringing the ratchet teeth 64, 65 into mesh with each other. The rotational torque of the kick spindle 21 is transmitted from the start gear 60 successively through the drive gear 25a of the first transmission, the transmission input shaft 14, the clutch 24, and the primary speed reducer 23 to the crankshaft 13, thereby cranking the crankshaft 13 to start the engine E. As the transmission T is in the neutral position, the rotation of the kick spindle 21 and the crankshaft 13 is not transmitted to the transmission output shaft 15.

When the engine E is started and the start gear 60 rotates faster than the clutch body 62, the ratchet teeth 64, 65 of the start gear 60 and the clutch body 62 repel each other, retracting the clutch body 62 away from the start gear 60. Then, the kick pedal 22a is released from the rider's foot, whereupon the kick arm 22 is returned to its original unoperated position under the bias of the return springs 66, 67.

After the engine E is started, while the clutch 24 is being disengaged, the change grip 54 is turned to axially shift the shift shaft 32 to select a desired one of the transmission gear trains Ga through Gd.

In the change mechanism C, the change arm 40 and the detent arm 46 which are positioned outside of the crankcase 11 are housed in the right side cover 20 that is joined to a right end face of the crankcase 11, and the driven pulley 51 is covered with a pulley cover 57 that is joined to an outer side wall of the right side cover 20. Therefore, the power unit P has a neat appearance, and the change mechanism C is made resistant to water and dust.

In particular, the component of the change mechanism C which extends through the right side cover 20 is the change spindle 42 which only rotates about its own axis, and the seal member 41 held in close contact with the outer circumferential surface of the change spindle 42 is mounted on the right side cover 20. Consequently, while the change mechanism C is in operation, the change spindle 42 is reliably prevented from drawing dust particles from outside of the right side cover 20.

Since the kick arm 22 is fixed to the right end of the kick spindle 21 which extends a long distance to the right laterally out of the crankcase 11, when the power unit P is mounted on the motorcycle, the kick arm 22 fixed to the right end of the kick spindle 21 is positioned laterally to the right of the motorcycle, and can easily be kicked. As the long kick spindle 21 is supported by three walls, i.e., the left and right opposite side walls of the crankcase 11 and the side wall of the right side cover 20, the supporting rigidity of the kick spindle 21 is effectively increased, thus increasing the durability of the kick spindle 21 and its supporting region. In addition, because the right side cover 20 is used to accommodate and support the change arm 40 and the change spindle 42 and also to support the kick spindle 21. Thus, the number of parts used is reduced, the structure is simplified, and the cost is reduced. The sector-shaped change arm 40 which is a relatively large and largely movable component among other components of the change mechanism C is disposed between the kick spindle 21 and the shift shaft 32. Consequently, the space in the right side cover 20 is effectively utilized to make the right side cover 20 and hence the power unit P compact.

The one-way clutch mechanism 61 and the return springs 66, 67 which make up the kick starter are accommodated separately in the crankcase 11 and the right side cover 20. Therefore, the one-way clutch mechanism 61 and the return springs 66, 67 can be assembled with ease and are made resistant to water and dust.

When the kick arm 22 is detached from the kick spindle 21, and the bolts 28 are loosened and the right side cover 20 is detached from the crankcase 11, the return springs 66, 67 remain on the kick spindle 21 that is supported by the crankcase 11, and the change arm 40 supported by the right side cover 20 is separated from the shift shaft 32. Accordingly, the maintenance of the return springs 66, 67 and the change arm 40 can be carried out with ease, i.e., their maintainability is high.

The right side cover 20 comprises the front half portion 20a supporting the kick spindle 21 and the rear half portion 20b accommodating the change mechanism C and supporting the change spindle 42, the front half portion 20a and the rear half portion 20b being integrated into a unitary structure which provides a continuous inner surface therein. The number of parts used and the number of assembling steps can be reduced, and the change mechanism C and the kick spindle 21,can be positioned closely to each other, thus making the power unit P compact.

The present invention is not limited to the above embodiment, but may be subject to various design changes without departing from its scope. For example, the drive gears 25a through 25d of the transmission gear trains Ga through Gd may be rotatably mounted on the transmission input shaft 14, the driven gears 26a through 26d thereof may be fixedly mounted on the transmission output shaft 15, and either one of the drive gears 25a through 25d may be selected and connected to the transmission input shaft 14 by the change mechanism C. The right side cover 20 may be divided into a portion supporting the kick spindle 21 and a portion accommodating the change mechanism C and supporting the change spindle 42, and these portions may individually be joined to a side wall of the crankcase 11.

## Claims

1. A power unit for a small-size vehicle having a crankcase (11) accommodating a crankshaft (13) supported therein, a transmission input shaft (14) accommodated and supported in said crankcase (11) and coupled to the crankshaft (13) by a clutch (24), a transmission output shaft (15) accommodated and supported in said crankcase (11), a plurality of transmission gear trains (Ga - Gd) disposed between the transmission input shaft (14) and the transmission output shaft (15), and a change mechanism (C) for selectively operating either one of said transmission gear trains (Ga - Gd), said change mechanism (C) having at least a portion disposed on one side of the crankcase (11),
wherein a side cover (20) accommodates a portion of the change mechanism (C) which is exposed out of the crankcase (11) and is detachably joined to a side wall of the crankcase (11), said side cover (20) supports a kick spindle (21) for cranking the crankshaft (13) in cooperation with the crankcase (11), and a kick arm (22) is fixed to an outer end of the kick spindle (21) which projects out of said side cover (20),
**characterized in that**
said change mechanism (C) comprises a shift shaft (32) slidably fitted with the center of at least one of the transmission input shaft (14) and the transmission output shaft (15) from the side cover (20), selectively operating either one of the transmission gear trains (Ga - Gd) corresponding to the sliding, a change spindle (42) angularly movably supported on the side cover (20), a change arm (40) mounted on the change spindle (42) in the side cover (20) for sliding the shift shaft (32) in response to angular movement of the change spindle (42), and a change control member (54) coupled to the change spindle (42) outside of the side cover (20), the change arm (40) being disposed between said shift shaft (32) and said kick spindle (21).

2. A power unit for a small-size vehicle according to claim 1, wherein said side cover (20) comprises
a first side cover (20b) accommodating the portion of the change mechanism (C) which is exposed out of the crankcase (11) and being detachably joined to th side wall of the crankcase (11), and a second side cover (20a) supporting the kick spindle (21) for cranking the crankshaft (13) in cooperation with the crankcase (11) and being detachably joined to the side wall of the crankcase (11).

3. A power unit for a small-size vehicle according to claim 2, **characterized in that** said kick spindle (21) is supported by three walls including a side wall of the second side cover (20a) and both side walls of the crankcase (11).

4. A power unit for a small-size vehicle according to claim 3, **characterized by** a one-way clutch mechanism (61) disposed in the crankcase (11) for transmitting rotational power of the kick spindle (21) to the crankshaft (13) in response to a kick action on the kick arm (22), and return springs (66, 67) disposed in the second side cover (20) for biasing the kick spindle (21) in a direction to return the kick arm (22).

## Patentansprüche

1. Antriebseinheit für ein Kleinfahrzeug mit einem Kurbelgehäuse (11), das eine darin gelagerte Kurbelwelle (13) aufnimmt, einer Getriebeeingangswelle (14), die in dem Kurbelgehäuse (11) aufgenommen und gelagert ist und mit der Kurbelwelle (13) durch eine Kupplung (24) gekoppelt ist, einer Getriebeausgangswelle (15), die in dem Kurbelgehäuse (11) aufgenommen und gelagert ist, einer Mehrzahl von Getriebezahnradzügen (Ga - Gd), die zwischen der Getriebeeingangswelle (14) und der Getriebeausgangswelle (15) angeordnet sind, und einem Schaltmechanismus (C) zum selektiven Betätigen eines der Getriebezahnradzüge (Ga - Gd), wobei der Schaltmechanismus (C) zumindest einen Abschnitt aufweist, der an einer Seite des Kurbelgehäuses (11) angeordnet ist,
worin ein Seitendeckel (20) einen Abschnitt des Schaltmechanismus (C) aufnimmt, der aus dem Kurbelgehäuse (11) freiliegt, und mit einer Seitenwand des Kurbelgehäuses (11) abnehmbar verbunden ist, wobei der Seitendeckel (20) im Zusammenwirken mit dem Kurbelgehäuse (11) eine Kickwelle (21) zum Andrehen der Kurbelwelle (13) trägt, und ein Kickhebel (22) am Außenende der Kickwelle (21), das aus dem Seitendeckel (20) vorsteht, befestigt ist,
**dadurch gekennzeichnet, dass** der Schaltmechanismus (C) aufweist: eine Schiebewelle (32), die von dem Seitendeckel (20) her verschiebbar an die Mitte zumindest einer der Getriebeeingangswelle (14) und der Getriebeausgangswelle (15) angesetzt ist, wobei sie entsprechend dem Verschieben selektiv einen der Getriebezahnradzüge (Ga - Gd) betätigt, eine Schaltwelle (42), die an dem Seitendeckel (20) winkelbeweglich gelagert ist, einen Schalthebel (40), der an der Schaltwelle (42) in dem Seitendeckel (20) angebracht ist, zum Verschieben der Schiebewelle (32) in Antwort auf Winkelbewegungen der Schaltwelle (42), und ein Schaltsteuerelement (54), das mit der Schaltwelle (42) außerhalb des Seitendeckels (20) gekoppelt ist, wobei der Schalthebel (40) zwischen der Schaltwelle (42) und der Kickwelle (21) angeordnet ist.

2. Antriebseinheit für ein Kleinfahrzeug nach Anspruch 1, worin der Seitendeckel (20) umfasst:
einen ersten Seitendeckel (20b), der den Abschnitt des Schaltmechanismus (C) aufnimmt, der aus dem Kurbelgehäuse (11) vorsteht und mit der Seitenwand des Kurbelgehäuses (11) abnehmbar verbunden ist, sowie einen zweiten Seitendeckel (20a), der im Zusammenwirken mit dem Kurbelgehäuse (11) die Kickwelle (21) zum Andrehen der Kurbelwelle (13) trägt und mit der Seitenwand des Kurbelgehäuses (11) abnehmbar verbunden ist.

3. Antriebseinheit für ein Kleinfahrzeug nach Anspruch 2, **dadurch gekennzeichnet, dass** die Kickwelle (21) an drei Wände gelagert ist, die eine Seitenwand des zweiten Seitendeckels (20a) und beide Seitenwände des Kurbelgehäuses (11) enthalten.

4. Antriebseinheit für ein Kleinfahrzeug nach Anspruch 3, **gekennzeichnet durch** einen Einwegkupplungsmechanismus (61), der in dem Kurbelgehäuse (11) angeordnet ist, um in Antwort auf eine Kippwirkung des Kickhebels (22) die Drehkraft der Kickwelle (21) auf die Kurbelwelle (13) zu übertragen, sowie Rückstellfedern (66, 67), die in dem zweiten Seitendeckel (20) angeordnet sind, um die Kickwelle (21) in Richtung zum Zurückstellen des Kickhebels (22) vorzuspannen.

## Revendications

1. Unité motrice pour un véhicule de petite taille comportant un carter de vilebrequin (11) logeant un vilebrequin (13) qui y est supporté, un arbre d'entrée de transmission (14) logé et supporté dans ledit carter de vilebrequin (11) et couplé au vilebrequin (13) par un embrayage (24), un arbre de sortie de transmission (15) logé et supporté dans ledit carter de vilebrequin (11), une pluralité de trains d'engrenages de transmission (Ga - Gd) disposés entre l'arbre d'entrée de transmission (14) et l'arbre de sortie de transmission (15), et un mécanisme de changement (C) pour commander sélectivement l'un ou l'autre desdits trains d'engrenages de transmission (Ga - Gd), ledit mécanisme de changement (C) comportant au moins une partie disposée sur un côté du carter de vilebrequin (11),
dans laquelle un couvercle latéral (20) loge une partie du mécanisme de changement (C), qui est exposée hors du carter de vilebrequin (11), et réuni, de manière amovible, à une paroi latérale du carter de vilebrequin (11), ledit couvercle latéral (20) supporte un axe de démarrage (21) pour lancer le vilebrequin (13) en coopération avec le carter de vilebrequin (11) et un levier de démarrage (22) est fixé à un extrémité externe de l'axe de démarrage (21) qui fait saillie hors dudit couvercle latéral (20),
**caractérisée en ce que**
ledit mécanisme de changement (C) comprend un arbre de déplacement (32) monté, de manière coulissante, avec le centre d'au moins l'un de l'arbre d'entrée de transmission (14) et de l'arbre de sortie de transmission (15) à partir du couvercle latéral (20), commandant sélectivement l'un ou l'autre des trains d'engrenages de transmission (Ga - Gd) correspondant au coulissement, un axe de changement (42) supporté, de manière angulairement mobile, sur le couvercle latéral (20), un levier de changement (40) monté sur l'axe de changement (42) dans le couvercle latéral (20) pour faire coulisser l'arbre de déplacement (32) en réponse à un déplacement angulaire de l'axe de changement (42), et un élément de commande de changement (54) couplé à l'axe de changement (42) en dehors du couvercle latéral (20), le levier de changement (40) étant disposé entre ledit arbre de déplacement (32) et ledit axe de démarrage (21).

2. Unité motrice pour un véhicule de petite taille selon la revendication 1, dans laquelle ledit couvercle latéral (20) comprend
un premier couvercle latéral (20b) logeant la partie du mécanisme de changement (C), qui est exposée hors du carter de vilebrequin (11), et réuni, de manière amovible, à la paroi latérale du carter de vilebrequin (11), et un second couvercle latéral (20a) supportant l'axe de démarrage (21) pour lancer le vilebrequin (13) en coopération avec le carter de vilebrequin (11) et réuni, de manière amovible, à la paroi latérale du carter de vilebrequin (11).

3. Unité motrice pour un véhicule de petite taille selon la revendication 2, **caractérisée en ce que** ledit axe de démarrage (21) est supporté par trois parois incluant une paroi latérale du second couvercle latéral (20a) et les deux parois latérales du carter de vilebrequin (11).

4. Unité motrice pour un véhicule de petite taille selon la revendication 3, **caractérisée par** un mécanisme d'embrayage unidirectionnel (61) disposé dans le carter de vilebrequin (11) pour transmettre la puissance gyratoire de l'axe de démarrage (21) au vilebrequin (13) en réponse à une action de démarrage sur le levier de démarrage (22), et des ressorts de rappel (66, 67) disposés dans le second couvercle latéral (20) pour solliciter l'axe de démarrage (21) suivant une direction qui ramène le levier de démarrage (22).
